(19) Europäisches Patentamt
European Patent Office
Office européen des brevets

(11) EP 4 165 699 B1

(12) **EUROPEAN PATENT SPECIFICATION**

(45) Date of publication and mention of the grant of the patent:
**15.05.2024 Bulletin 2024/20**

(21) Application number: **21731453.3**

(22) Date of filing: **07.06.2021**

(51) International Patent Classification (IPC):
***H01M 4/1391*** *(2010.01)* ***H01M 4/131*** *(2010.01)*
***H01M 4/04*** *(2006.01)* ***H01M 4/525*** *(2010.01)*
***H01M 10/0562*** *(2010.01)*

(52) Cooperative Patent Classification (CPC):
**H01M 4/1391; H01M 4/043; H01M 4/131; H01M 4/525; H01M 10/0562;** H01M 2300/002; Y02E 60/10

(86) International application number:
**PCT/EP2021/065172**

(87) International publication number:
**WO 2021/254808 (23.12.2021 Gazette 2021/51)**

(54) **PROCESS FOR MAKING AN ELECTRODE, AND ELECTRODE ACTIVE MATERIALS**

VERFAHREN ZUR HERSTELLUNG EINER ELEKTRODE UND ELEKTRODENAKTIVE MATERIALIEN

PROCÉDÉ DE FABRICATION D'UNE ÉLECTRODE ET MATÉRIAUX ACTIFS D'ÉLECTRODE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.06.2020 EP 20180372**

(43) Date of publication of application:
**19.04.2023 Bulletin 2023/16**

(73) Proprietor: **BASF SE**
**67056 Ludwigshafen am Rhein (DE)**

(72) Inventors:
- **TOMOTA, Yohko**
  **Amagasaki, Hyogo 660-0083 (JP)**
- **ERK, Christoph**
  **67056 Ludwigshafen (DE)**
- **HARTMANN, Pascal**
  **67056 Ludwigshafen (DE)**

(74) Representative: **BASF IP Association**
**BASF SE**
**GBI-C006**
**67056 Ludwigshafen (DE)**

(56) References cited:
**EP-A1- 0 736 918** **US-A1- 2014 072 697**

- **ZHAN LIN ET AL: "Lithium Superionic Sulfide Cathode for All-Solid Lithium-Sulfur Batteries", ACS NANO, vol. 7, no. 3, 26 March 2013 (2013-03-26), pages 2829-2833, XP055216681, ISSN: 1936-0851, DOI: 10.1021/nn400391h**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 165 699 B1

## Description

The present invention is directed towards a process for making an electrode wherein the process comprises the following steps

(a) providing a particulate lithiated transition metal oxide according to the formula $Li_{1+x}TM_{1-x}O_2$ wherein x is in the range of from zero to 0.1 and TM contains nickel and at least one of Co, Mn and Al,
(b) mixing the lithiated transition metal oxide from step (a) with carbon in electrically conductive form,
(c) exposing the mixture obtained in step (b) to a pressure in the range of from 100 to 500 MPa over a period of time of from one second to one minute, thereby causing cracks in at least some of the particles of the electrode active material,
(d) mixing the mixture from step (c) with a binder polymer and, optionally, with further carbon in electrically conductive form and with a solvent,
(e) applying the mixture from step (d) to a metal foil.

Additionally, the present invention is directed to electrode active materials.

Lithiated transition metal oxides are currently being used as electrode active materials for lithium-ion batteries. Extensive research and developmental work have been performed in the past to improve properties like the reduced cycle life and capacity loss that may adversely affect the lifetime or applicability of a lithium-ion battery. Additional effort has been made to improve manufacturing methods.

In a typical process for making cathode materials for lithium-ion batteries, first a so-called precursor is being formed by co-precipitating the transition metals as carbonates, oxides or preferably as hydroxides that may or may not be basic. The precursor is then mixed with a source of lithium such as, but not limited to LiOH, $Li_2O$ or $Li_2CO_3$ and calcined (fired) at high temperatures. Lithium salt(s) can be employed as hydrate(s) or in dehydrated form. The calcination - or firing - generally also referred to as thermal treatment or heat treatment of the precursor - is usually carried out at temperatures in the range of from 600 to 1000 °C. During the thermal treatment a solid-state reaction takes place, and the electrode active material is formed. The thermal treatment is performed in the heating zone of an oven or kiln.

An ongoing issue remains the problem of capacity fade. Various theories exist about the reason for the capacity fade, and - among others - the surface properties the cathode active materials have been modified, for example by coating with an inorganic oxide or with polymers. All of the suggested solutions leave room for improvement. Various theories have been developed with respect to the reason for such capacity fade upon repeated cycling. One of those theories is related to crack formation and attempts to prevent crack formation, for example by coating methods, US 2017/0104217, by tungsten oxide addition into the particle interspace EP 3 553 856, or by specific co-precipitation conditions, US 2018/0166687. All said references teach to avoid crack formation but leave room for improvement. Further relevant prior art is disclosed in the document US 2014/072697 A1.

It was therefore an objective of the present invention to provide electrodes with low capacity fading and thus a high cycling stability. It was further an objective to provide a process for making such electrodes with both a low capacity fading and thus a high cycling stability. It was further an objective to provide electrode active materials with low capacity fading and thus a high cycling stability.

Accordingly, the process defined at the outset has been found, hereinafter also referred to as inventive process or process according to the present invention.

The inventive process comprises the following steps (a) to (e), hereinafter also referred to as step (a) or step (b) or step (c) or step (d) or step (e), or briefly as (a) or (b) or (c) or (d) or (e), respectively: Steps (a) to (e) will be described hereinafter in more detail below.

Step (a) starts off from a lithiated transition metal oxide according to the general formula $Li_{1-x}TM_{1-x}O_2$ wherein x is in the range of from zero to 0.1, from zero to 0.1, preferably 0.01 to 0.05, and TM contains nickel and at least one of Co, Mn and Al.

Said TM may contain traces of further metal ions, for example traces of ubiquitous metals such as sodium, calcium or zinc, as impurities but such traces will not be taken into account in the description of the present invention. Traces in this context will mean amounts of 0.05 mol-% or less, referring to the total metal content of TM.

In one embodiment of the present invention lithiated transition metal oxide according to general formula $Li_{1+x}TM_{1-x}O_2$ has an average particle diameter (D50) in the range of from 3 to 20 μm, preferably from 5 to 16 μm. The average particle diameter may be determined, e. g., by light scattering or LASER diffraction or electroacoustic spectroscopy. The particles are usually composed of agglomerates from primary particles, and the above particle diameter refers to the secondary particle diameter.

In one embodiment of the present invention, the primary particles of lithiated transition metal oxide according to general formula $Li_{1+x}TM_{1-x}O_2$ have an average diameter (D50) in the range from 1 to 2000 nm, preferably from 10 to 1000 nm, particularly preferably from 50 to 500 nm. The average primary particle diameter can, for example, be determined

by SEM or TEM, or by LASER scattering.

In one embodiment of the present invention, TM is a combination of transition metals according to general formula (I)

$$(Ni_aCo_bMn_c)_{1-d}M^1_d \qquad (I)$$

wherein

a is in the range of from 0.6 to 1.0, preferably 0.7 to 0.9, and more preferably 0.75 to 0.85,
b being in the range of from zero to 0.2, preferably 0.05 to 0.2,
c being in the range of from zero to 0.2, preferably 0.01 to 0.1, and
d being in the range of from zero to 0.1, preferably 0.001 to 0.005,
$M^1$ is selected from Al, Ti, Zr, W, Nb, Ta, Mo, Mg and combinations of at least two of the aforementioned, of which Al and Ti and Zr and combinations of at least two of the aforementioned are preferred,

$$a + b + c = 1,$$

and
at least one of b, c and d is greater than zero.

In one embodiment of the present invention, lithiated transition metal oxide provided in step (a) have a specific surface (BET), hereinafter also referred to as "BET surface", in the range of from 0.1 to 1.0 $m^2/g$. The BET surface may be determined by nitrogen adsorption after outgassing of the sample at 200°C for 30 minutes and, beyond this, according to DIN-ISO 9277:2003-05.

In step (b), the above lithiated transition metal oxide is mixed with carbon in electrically conductive form, hereinafter also referred to as carbon (B). Carbon (B) can be selected from soot, active carbon, carbon nanotubes, graphene, and graphite. Carbon (B) can be added as such during the inventive process. A preferred carbon (B) is graphite.

In step (b), no binder (C) is added or present. Binders (C) - also referred to as binder polymers (C) - are described in more detail below.

In step (b), it is preferred to mix lithiated transition metal oxide with carbon (B) wherein the quantities of carbon (B) are lower than of the lithiated transition metal oxide. Preferably, in step (b), the weight ratio of lithiated transition metal oxide provided in step (a) and carbon (B) is in the range of from 100:1 to 20:1, preferably 60:1 to 25:1.

In one embodiment of the present invention, the average particle diameter of carbon (B) in step (b) is in the range of from 1 to 20 $\mu$m. Preferably, carbon (B) is selected from synthetic graphite with platelet-shaped secondary particles.

In one embodiment of the present invention, the mixing in step (b) is performed in a high-shear mixer, in a plough-share mixer, in a free-fall mixer, or in a ball mill. On laboratory scale, shakers and roller mixers are suitable as well. On laboratory scale, mortars with pestles are useful as well.

In step (c), the mixture obtained in step (b) is exposed to a pressure in the range of from 100 to 500 MPa, preferably 120 to 350 MPa, thereby causing cracks in at least some of the particles of the electrode active material. The crack level is in the range of from 5 to 30, preferably at least 20 and refers to at least 25% of all particles of the respective electrode active material.

Step (c) may be performed in various types of vessels. Suitable are, for example, isostatic pressing devices. Isostatic pressing devices may be selected from so-called "cold" isostatic pressing devices and "hot" isostatic pressing devices, and they are known from the formation of green bodies of ceramics, and from the casting industry. On laboratory scale, tablet presses are useful as well.

In one embodiment of the present invention, step (c) is performed at a temperature in the range of from 10 to 50°C. It is possible to perform external cooling during step (c). Preferably, step (c) is performed without external heating or cooling.

The duration of step (c) is in the range of from one second to one minute, preferably 5 to 30 seconds.

In the course of step (c), cracks are formed in the particles of lithiated transition metal oxide. The cracks may be detected by SEM (Scanning Electron Microscopy), and the crack level is determined as follows: the SEM picture is analyzed by an edge detection algorithm, which computes the gradient of image intensity and thus detects the cracks.

Such cracks may have any shape. They may follow primary particles but not affect them. In an alternative embodiment, cracks may affect primary particles as well. Preferably, such cracks affect secondary particles but not primary particles. Cracks may be in one direction only or may display turns, for example, they may be zig-zag shaped.

In the subsequent step (d), the mixture from step (c) is mixed with a binder polymer (C) and, optionally, with

further carbon in electrically conductive form, carbon (B), and with a solvent.

Cathodes according to the present invention contain carbon in electrically conductive modification, in brief also referred to as carbon (B). Carbon (B) can be selected from soot, active carbon, carbon nanotubes, graphene, and graphite. Carbon (B) can be added as such during preparation of electrode materials according to the invention.

Electrodes according to the present invention can comprise further components. They can comprise a current collector (D), such as, but not limited to, an aluminum foil. They further comprise a binder polymer (C), hereinafter also referred to as binder (C). Current collector (D) is not further described here.

Suitable binders (C) are preferably selected from organic (co)polymers. Suitable (co)polymers, i.e. homopolymers or copolymers, can be selected, for example, from (co)polymers obtainable by anionic, catalytic or free-radical (co)polymerization, especially from polyethylene, polyacrylonitrile, polybutadiene, polystyrene, and copolymers of at least two comonomers selected from ethylene, propylene, styrene, (meth)acrylonitrile and 1,3-butadiene. Polypropylene is also suitable. Polyisoprene and polyacrylates are additionally suitable. Particular preference is given to polyacrylonitrile.

In the context of the present invention, polyacrylonitrile is understood to mean not only polyacrylonitrile homopolymers but also copolymers of acrylonitrile with 1,3-butadiene or styrene. Preference is given to polyacrylonitrile homopolymers.

In the context of the present invention, polyethylene is not only understood to mean homopoly-ethylene, but also copolymers of ethylene which comprise at least 50 mol% of copolymerized ethylene and up to 50 mol% of at least one further comonomer, for example $\alpha$-olefins such as propylene, butylene (1-butene), 1-hexene, 1-octene, 1-decene, 1-dodecene, 1-pentene, and also isobutene, vinylaromatics, for example styrene, and also (meth)acrylic acid, vinyl acetate, vinyl propionate, $C_1$-$C_{10}$-alkyl esters of (meth)acrylic acid, especially methyl acrylate, methyl methacrylate, ethyl acrylate, ethyl methacrylate, n-butyl acrylate, 2-ethylhexyl acrylate, n-butyl methacrylate, 2-ethylhexyl methacrylate, and also maleic acid, maleic anhydride and itaconic anhydride. Polyethylene may be HDPE or LDPE.

In the context of the present invention, polypropylene is not only understood to mean homopolypropylene, but also copolymers of propylene which comprise at least 50 mol% of copolymerized propylene and up to 50 mol% of at least one further comonomer, for example ethylene and $\alpha$-olefins such as butylene, 1-hexene, 1-octene, 1-decene, 1-dodecene and 1-pentene. Polypropylene is preferably isotactic or essentially isotactic polypropylene.

In the context of the present invention, polystyrene is not only understood to mean homopolymers of styrene, but also copolymers with acrylonitrile, 1,3-butadiene, (meth)acrylic acid, $C_1$-$C_{10}$-alkyl esters of (meth)acrylic acid, divinylbenzene, especially 1,3-divinylbenzene, 1,2-diphenylethylene and $\alpha$-methylstyrene.

Another preferred binder (C) is polybutadiene.

Other suitable binders (C) are selected from polyethylene oxide (PEO), cellulose, carboxymethylcellulose, polyimides and polyvinyl alcohol.

In one embodiment of the present invention, binder (C) is selected from those (co)polymers which have an average molecular weight $M_w$ in the range from 50,000 to 1,000,000 g/mol, preferably to 500,000 g/mol.

Binder (C) may be cross-linked or non-cross-linked (co)polymers.

In a particularly preferred embodiment of the present invention, binder (C) is selected from halogenated (co)polymers, especially from fluorinated (co)polymers. Halogenated or fluorinated (co)polymers are understood to mean those (co)polymers which comprise at least one (co)polymerized (co)monomer which has at least one halogen atom or at least one fluorine atom per molecule, more preferably at least two halogen atoms or at least two fluorine atoms per molecule. Examples are polyvinyl chloride, polyvinylidene chloride, polytetrafluoroethylene, polyvinylidene fluoride (PVdF), tetrafluoroethylene-hexafluoropropylene copolymers, vinylidene fluoride-hexafluoropropylene copolymers (PVdF-HFP), vinylidene fluoride-tetrafluoroethylene copolymers, perfluoroalkyl vinyl ether copolymers, ethylene-tetrafluoroethylene copolymers, vinylidene fluoride-chlorotrifluoroethylene copolymers and ethylene-chlorofluoroethylene copolymers.

Suitable binders (C) are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene.

Suitable solvents that may be added are organic non-protic solvents such as N-methyl pyrrolidone (NMP), N-ethyl pyrrolidone (NEP), dimethyl sulfoxide (DMSO), aromatic hydrocarbons such as, but not limited to toluene and ethylbenzene and xylene, for example m-xylene and o-xylene and mixtures of the isomers of xylene.

In a preferred embodiment of the present invention, the amounts of carbon (B) and binder polymer (C) are selected as follows:

(A) 80 to 99 % by weight cathode active material obtained from step (c),
(B) 0.5 to 19.5 % by weight of carbon,
(C) 0.5 to 9.5 % by weight of binder polymer,

percentages referring to the sum of (A), (B) and (C).

The amount of solvent - if applicable - is selected that a slurry or paste is formed, for example 25 % by weight

up to the 10-fold of the sum of cathode active material obtained from step (c) and carbon (B) and binder polymer (C).

Mixing may be performed in any suitable vessel. Mixing is preferably performed until a lump-free slurry or paste is obtained.

In step (e), the mixture obtained from step (e) is applied to a metal foil, for example an aluminium foil. Such metal foil then serves as a current collector. Said applying includes placing slurry or paste from step (d) on said metal foil, for example by spraying or by dipping or by a doctor blade or with a squeegee, securing the layer of slurry or paste from step (d) to have a homogeneous thickness, and removing the solvent - if present - for example by drying under reduced pressure.

Step (e) may further include a calendaring step.

Cathodes made according to the inventive process are excellent components for electrochemical cells and especially for lithium ion batteries.

Another aspect of the present invention is related to electrode active materials, hereinafter also referred to as inventive electrode active materials or inventive cathode active materials. Inventive electrode materials may be manufactured in accordance with the inventive process. Inventive electrode materials are described in more detail below.

Inventive electrode materials are characterized in that they are particulate electrode active material according to the formula $Li_{1+x}TM_{1-x}O_2$ wherein x is in the range of from zero to 0.1, preferably 0.01 to 0.05, and TM contains nickel and at least one of Co, Mn and Al, for example Ni, Co and Al or Ni, Co and Mn, or Ni, Mn and Al, and wherein at least 25 % of all particles having a crack level of at least 5, for example is in the range of from 5 to 30, and wherein such cracks contain carbon in electrically conductive form.

In one embodiment of the present invention inventive electrode active materials have an average particle diameter (D50) in the range of from 3 to 20 μm, preferably from 5 to 16 μm. The average particle diameter may be determined, e. g., by light scattering or LASER diffraction or electroacoustic spectroscopy. The particles are usually composed of agglomerates from primary particles, and the above particle diameter refers to the secondary particle diameter.

In one embodiment of the present invention, the primary particles of inventive electrode active materials have an average diameter (D50) in the range from 1 to 2000 nm, preferably from 10 to 1000 nm, particularly preferably from 50 to 500 nm. The average primary particle diameter can, for example, be determined by SEM or TEM, or by LASER scattering.

In one embodiment of the present invention, TM in the formula $Li_{1+x}TM_{1-x}O_2$ is a combination of elements according to general formula (I)

$$(Ni_aCo_bMn_c)_{1-d}M^1_d \qquad (I)$$

wherein

a is in the range of from 0.6 to 1.0, preferably 0.7 to 0.9, and more preferably 0.75 to 0.85,
b being in the range of from zero to 0.2, preferably 0.05 to 0.2,
c being in the range of from zero to 0.2, preferably 0.01 to 0.1, and
d being in the range of from zero to 0.1, preferably 0.001 to 0.005,
$M^1$ is selected from Al, Ti, Zr, W, Nb, Ta, Mo, Mg and combinations of at least two of the aforementioned, of which Al and Ti and Zr and combinations of at least two of the aforementioned are preferred,
and

$$a + b + c = 1.$$

Inventive electrode active materials are further characterized in that at least 25 % of the particles have a crack level of at least 5, for example in the range of from 5 to 30, preferably of at least 20, and such cracks contain carbon in electrically conductive form, preferably graphite. The cracks may be detected by SEM (Scanning Electron Microscopy), and the crack level is determined as follows: the respective SEM picture is analyzed by an edge detection algorithm, which computes the gradient of image intensity and thus detects the cracks.

In one embodiment of the present invention, inventive electrode active materials have a specific surface (BET) in the range of from 0.1 to 1.0 $m^2/g$. The BET surface may be determined by nitrogen adsorption after outgassing of the sample at 200°C for 30 minutes and, beyond this, according to DIN-ISO 9277:2003-05.

In one embodiment of the present invention, inventive electrode active materials the weight ratio of lithiated transition metal oxide provided and carbon (B) is in the range of from 100:1 to 20:1, preferably 60:1 to 25:1.

The cracks usually do not contain binder polymer (C).

A further aspect of the present invention is an electrochemical cell, containing

(1) a cathode comprising inventive electrode active material (A), carbon (B), and binder (C),
(2) an anode, and
(3) at least one electrolyte.

Embodiments of cathode (1) have been described above in detail.

Anode (2) may contain at least one anode active material, such as carbon (graphite), $TiO_2$, lithium titanium oxide, silicon or tin. Anode (2) may additionally contain a current collector, for example a metal foil such as a copper foil.

Electrolyte (3) may comprise at least one non-aqueous solvent, at least one electrolyte salt and, optionally, additives.

Non-aqueous solvents for electrolyte (3) can be liquid or solid at room temperature and is preferably selected from among polymers, cyclic or acyclic ethers, cyclic and acyclic acetals and cyclic or acyclic organic carbonates.

Examples of suitable polymers are, in particular, polyalkylene glycols, preferably poly-$C_1$-$C_4$-alkylene glycols and in particular polyethylene glycols. Polyethylene glycols can here comprise up to 20 mol% of one or more $C_1$-$C_4$-alkylene glycols. Polyalkylene glycols are preferably polyalkylene glycols having two methyl or ethyl end caps.

The molecular weight $M_w$ of suitable polyalkylene glycols and in particular suitable polyethylene glycols can be at least 400 g/mol.

The molecular weight $M_w$ of suitable polyalkylene glycols and in particular suitable polyethylene glycols can be up to 5,000,000 g/mol, preferably up to 2,000,000 g/mol.

Examples of suitable acyclic ethers are, for example, diisopropyl ether, di-n-butyl ether, 1,2-dimethoxyethane, 1,2-diethoxyethane, with preference being given to 1,2-dimethoxyethane.

Examples of suitable cyclic ethers are tetrahydrofuran and 1,4-dioxane.

Examples of suitable acyclic acetals are, for example, dimethoxymethane, diethoxymethane, 1,1-dimethoxyethane and 1,1-diethoxyethane.

Examples of suitable cyclic acetals are 1,3-dioxane and, in particular, 1,3-dioxolane.

Examples of suitable acyclic organic carbonates are dimethyl carbonate, ethyl methyl carbonate and diethyl carbonate.

Examples of suitable cyclic organic carbonates are compounds of the general formulae (II) and (III)

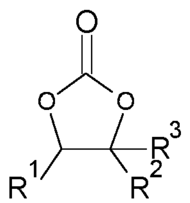

(II)

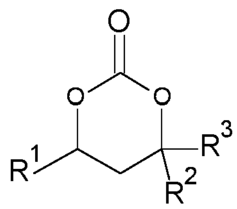

(III)

where $R^1$, $R^2$ and $R^3$ can be identical or different and are selected from among hydrogen and $C_1$-$C_4$-alkyl, for example methyl, ethyl, n-propyl, isopropyl, n-butyl, isobutyl, sec-butyl and tert-butyl, with $R^2$ and $R^3$ preferably not both being tert-butyl.

In particularly preferred embodiments, $R^1$ is methyl and $R^2$ and $R^3$ are each hydrogen, or $R^1$, $R^2$ and $R^3$ are each hydrogen.

Another preferred cyclic organic carbonate is vinylene carbonate, formula (IV).

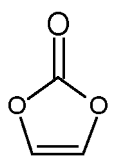

(IV)

The solvent or solvents is/are preferably used in the water-free state, i.e. with a water content in the range from 1 ppm to 0.1% by weight, which can be determined, for example, by Karl-Fischer titration.

Electrolyte (3) further comprises at least one electrolyte salt. Suitable electrolyte salts are, in particular, lithium salts. Examples of suitable lithium salts are $LiPF_6$, $LiBF_4$, LiClOa, $LiAsF_6$, $LiCF_3SO_3$, $LiC(C_nF_{2n+1}SO_2)_3$, lithium imides such as $LiN(C_nF_{2n+1}SO_2)_2$, where n is an integer in the range from 1 to 20, $LiN(SO_2F)_2$, $Li_2SiF_6$, $LiSbF_6$, LiAlCl4 and

salts of the general formula $(C_nF_{2n-1}SO_2)_tYLi$, where m is defined as follows:

- t = 1, when Y is selected from among oxygen and sulfur,
- t = 2, when Y is selected from among nitrogen and phosphorus, and
- t = 3, when Y is selected from among carbon and silicon.

Preferred electrolyte salts are selected from among $LiC(CF_3SO_2)_3$, $LiN(CF_3SO_2)_2$, $LiPF_6$, $LiBF_4$, $LiClO_4$, with particular preference being given to $LiPF_6$ and $LiN(CF_3SO_2)_2$.

In a preferred embodiment of the present invention, electrolyte (3) contains at least one flame retardant. Useful flame retardants may be selected from trialkyl phosphates, said alkyl being different or identical, triaryl phosphates, alkyl dialkyl phosphonates, and halogenated trialkyl phosphates. Preferred are tri-$C_1$-$C_4$-alkyl phosphates, said $C_1$-$C_4$-alkyls being different or identical, tribenzyl phosphate, triphenyl phosphate, $C_1$-$C_4$-alkyl di- $C_1$-$C_4$-alkyl phosphonates, and fluorinated tri-$C_1$-$C_4$-alkyl phosphates,

In a preferred embodiment, electrolyte (3) comprises at least one flame retardant selected from trimethyl phosphate, $CH_3$-$P(O)(OCH_3)_2$, triphenylphosphate, and tris-(2,2,2-trifluoroethyl)-phosphate.

Electrolyte (3) may contain 1 to 10% by weight of flame retardant, based on the total amount of electrolyte.

In one embodiment of the present invention, electrolyte (3) is solid at ambient temperature and contains sulfur and phosphorus, hereinafter also referred to as solid electrolyte (3).

In this context, the term "solid" refers to the state of matter at ambient temperature.

In one embodiment of the present invention, solid electrolyte (3) has a lithium-ion conductivity at 25 °C of $\geq 0.1$ mS/cm, preferably in the range of from 0.1 to 30 mS/cm, measurable by, e.g., impedance spectroscopy.

In one embodiment of the present invention, solid electrolyte (3) comprises $Li_3PS_4$, yet more preferably orthorhombic $\beta$-$Li_3PS_4$.

In one embodiment of the present invention, solid electrolyte (3) is selected from the group consisting of $Li_2S$-$P_2S_5$, $Li_2S$-$P_2S_5$-LiI, $Li_2S$-$P_2S_5$-$Li_2O$, $Li_2S$-$P_2S_5$-$Li_2O$-LiI, $Li_2S$-$SiS_2$-$P_2S_5$-LiI, $Li_2S$-$P_2S_5$-$Z_mS_n$ wherein m and n are positive numbers and Z is a member selected from the group consisting of germanium, gallium and zinc, $Li_2S$-$SiS_2$-$Li_3PO_4$, $Li_2S$-$SiS_2$-$Li_yPO_z$, wherein y and z are positive numbers, $Li_7P_3S_{11}$, $Li_3PS_4$, $Li_{11}S_2PS_{12}$, $Li_7P_2S_8I$, and $Li_{7-r-2s}PS_{6-r-s}X^1_r$ wherein $X^1$ is chlorine, bromine or iodine, and the variables are defined as follows:

$$0.8 \leq r \leq 1.7$$

$$0 \leq s \leq (-0.25\ r) + 0.5.$$

A particularly preferred example of solid electrolytes (3) is $Li_6PS_5Cl$, thus, r = 1.0 and s = zero.

In one embodiment of the present invention, solid electrolyte (3) is doped with at least one of Si, Sb, Sn. Si is preferably provided as element. Sb and Sn are preferably provided as sulfides.

In an embodiment of the present invention, batteries according to the invention comprise one or more separators (4) by means of which the electrodes are mechanically separated. Suitable separators (4) are polymer films, in particular porous polymer films, which are unreactive toward metallic lithium. Particularly suitable materials for separators (4) are polyolefins, in particular film-forming porous polyethylene and film-forming porous polypropylene.

Separators (4) composed of polyolefin, in particular polyethylene or polypropylene, can have a porosity in the range from 35 to 50%. Suitable pore diameters are, for example, in the range from 30 to 500 nm.

In another embodiment of the present invention, separators (4) can be selected from among PET nonwovens filled with inorganic particles. Such separators can have a porosity in the range from 40 to 55%. Suitable pore diameters are, for example, in the range from 80 to 750 nm. Batteries according to the invention can further comprise a housing which can have any shape, for example cuboidal or the shape of a cylindrical disk. In one variant, a metal foil configured as a pouch is used as housing.

Batteries according to the invention provide a very good discharge and cycling behavior, in particular at high temperatures (45 °C or higher, for example up to 60°C) in particular with respect to the capacity loss.

Batteries according to the invention can comprise two or more electrochemical cells that combined with one another, for example can be connected in series or connected in parallel. Connection in series is preferred. In batteries according to the present invention, at least one of the electrochemical cells contains at least one electrode according to the invention. Preferably, in electrochemical cells according to the present invention, the majority of the electrochemical cells contain an electrode according to the present invention. Even more preferably, in batteries according to the present invention all the electrochemical cells contain electrodes according to the present invention.

The present invention further provides for the use of batteries according to the invention in appliances, in

particular in mobile appliances. Examples of mobile appliances are vehicles, for example automobiles, bicycles, aircraft or water vehicles such as boats or ships. Other examples of mobile appliances are those which move manually, for example computers, especially laptops, telephones or electric hand tools, for example in the building sector, especially drills, battery-powered screwdrivers or battery-powered staplers.

The present invention is further illustrated by working examples.

General:

NMP: N-methyl pyrrolidone

The crack level was determined as follows: the SEM pictures of arbitrarily selected particles was analyzed by an edge detection algorithm named "canny" which computed the gradient of image intensity. The algorithm applies double thresholding to determine potential edges, and track edge by hysteresis to detect final edge of object. It detects cracks inside of secondary particles and outlines of particles as edge, as, e.g., shown in figure 1 b. The outlines of particles are removed by eroding particle area, and remaining edges are defined as crack. Said crack pixels are normalized by particle area, which are shaded in grey in figure 1 c. The detected crack pixels are normalized by particle are pixels, which are shown in figure 1C, shaded area in gray.

Percentages are % by weight unless specifically indicated otherwise.

(B.1): synthetic graphite, platelet shape, 6 μm particle diameter

I. Manufacture of inventive electrode active materials

I.1 Synthesis of a precursor TM-OH.1

A stirred tank reactor was filled with deionized water and 49 g of ammonium sulfate per kg of water. The solution was tempered to 55°C and a pH value of 12 was adjusted by adding an aqueous sodium hydroxide solution.

The co-precipitation reaction was started by simultaneously feeding an aqueous transition metal sulfate solution and aqueous sodium hydroxide solution at a flow rate ratio of 1.8, and a total flow rate resulting in a residence time of 8 hours. The transition metal solution contained Ni, Co and Mn at a molar ratio of 8.3:1.2:0.5 and a total transition metal concentration of 1.65 mol/kg. The aqueous sodium hydroxide solution was a 25 wt.% sodium hydroxide solution and 25 wt.% ammonia solution in a weight ratio of 6. The pH value was kept at 12 by the separate feed of an aqueous sodium hydroxide solution. Beginning with the start-up of all feeds, mother liquor was removed continuously. After 33 hours all feed flows were stopped. The mixed transition metal (TM) hydroxide precursor TM-OH.1, average particle diameter (D50): 10.6 μm, was obtained by filtration of the resulting suspension, washing with distilled water, drying at 120°C in air and sieving.

I.2 Conversion of TM-OH.1 into cathode active materials

I.2.1 Manufacture of a base cathode active material, B-CAM.1, step (a.1)

B-CAM.1 (base): The mixed transition metal hydroxide precursor TM-OH.1 was mixed with Li-OH monohydrate in a Li/(TM) molar ratio of 1.03, and with $TiO_2$ and $ZrO_2$. The amounts of Ti and Zr were adjusted to obtain 0.17 % Ti as well as 0.17 % Zr by mole referred to the total amount of TM (TM = Ni + Co + Mn + Ti + Zr). The resultant mixture was heated to 780°C and kept for 10 hours in a forced flow of a mixture of 60% oxygen and 40% nitrogen (by volume). After cooling to ambient temperature, the resultant powder was deagglomerated and sieved through a 32 μm mesh to obtain the base cathode active material B-CAM 1.

D50 = 10.6 μm determined using the technique of laser diffraction in a Mastersize 3000 instrument from Malvern Instruments. Residual moisture at 250 °C was determined to be 300 ppm. Specific surface (BET): 0.17 $m^2/g$.

I.2.2 Mixing with carbon (B), step (b.1)

B-CAM.1 and (B.1) were mixed in a weight ratio of 100:3 at ambient temperature in a bottle on a roller mixer for one hour. A mixture was obtained.

I.2.3 Exposure to pressure, step (c.1)

An amount of 5 g of a mixture obtained from step (b.1) was filled into a pellet press, inner diameter 16.07 mm,

and pressed at 150 MPa for 10 seconds. The pressure was then released and the tablet-shaped body formed under the pressure was removed from the tablet press, gently delumped and sieved through a 32 μm vibrational screen. A free-flowing powder of CAM.1 was obtained. By image analysis, a crack level of 5.9 was determined.

I.2.4 Exposure to pressure, step (c.2)

An amount of 5 g of a mixture obtained from step (b.1) was filled into a pellet press, inner diameter 16.07 mm, and pressed at 300 MPa for 10 seconds. The pressure was then released and the tablet-shaped body formed under the pressure was removed from the tablet press, gently delumped and sieved through a 32 μm vibrational screen. A free-flowing powder of CAM.2 was obtained. By image analysis, a crack level of 21.1 was determined.

II. Manufacture of electrodes

II.1 Cathode manufacture, steps (d) and (e)

Step (d.1) and (d.2) and C-(d.3): PVDF binder (Solef® 5130) was dissolved in NMP (Merck) to produce an 8.0 wt.% solution. For electrode preparation, binder solution (4 wt.%), and carbon black (Li250, 3.5 wt.-%) were suspended in NMP. After mixing using a planetary centrifugal mixer (ARE-250, Thinky Corp.; Japan), either any of inventive CAM.1 (step (d.1) or CAM.2 (step (d.2) or base cathode active material B-CAM.1, step C-(d.3), (92.5 wt.%) was added and the suspension was mixed again to obtain a lump-free slurry. The solid content of the slurry was adjusted to 65%.

Step (e.1): The slurry from (d.1) was coated onto Al foil using a KTF-S roll-to-roll coater (Mathis AG).
Step (e.2): The slurry from (d.2) was coated onto Al foil using a KTF-S roll-to-roll coater (Mathis AG).
Step C-(e.3): The slurry from C-(d.1) was coated onto Al foil using a KTF-S roll-to-roll coater (Mathis AG).

Electrode coating corresponded to 15 mg/cm$^2$. All electrodes were dried at 120°C for 7 hours before battery assembly.

II.2 Electrolyte Manufacture

A base electrolyte composition was prepared containing 12.7 wt% of $LiPF_6$, 26.2 wt% of ethylene carbonate (EC), and 61.1 wt% of ethyl methyl carbonate (EMC) (EL base 1), based on the total weight of EL base 1. To this base electrolyte formulation 2wt.% of vinylene carbonate (VC) was added (EL base 2).

II.3 Test cell Manufacture

Coin-type half cells (20 mm in diameter and 3.2 mm in thickness) comprising a cathode prepared as described under III.1.1 and lithium metal as working and counter electrode, respectively, were assembled and sealed in an Ar-filled glove box. In addition, the cathode and anode and a separator were superposed in order of cathode // separator // Li foil to produce a half coin cell. Thereafter, 0.15 mL of the EL base 1 which is described above (III.2) were introduced into the coin cell.

III. Evaluation of coin half-cell performance

Cell performance were evaluated using the produced coin type battery. For the battery performances, initial capacity and reaction resistance of cell were measured. The initial performance and rate performance were measured as follows: Coin half cells according to 11.3.1 were tested in a voltage range between 4.3 V to 3.0 V at 25°C. For the initial cycles, the initial lithiation was conducted in the CC-CV mode, i.e., a constant current (CC) of 0.1 C was applied until reaching 0.01 C. Reductive lithiation was carried out at constant current of 0.1 C up to 3.0V. After formation cycle, rate property was measured with 3C discharge. Relative rate performance[%] is based on discharge capacity at 0.1C. The results are summarized in Table 1.

Cycle performance was tested as follows; After the evaluation of initial performance, the coin cells were cycled with 0.5C-CC-CV charge and 1C CC discharge at 25 deg. Direct current internal resistance ("DCIR") was measured at before and after cycle, by applying 0.5C discharge for 30 seconds at state of charge 50%. Cycle retention and DCIR increase are based on those of before cycle as 100%. The results are summarized in Tables 1 and 2.

Table.1 Cell initial performance

| Sample | Crack level | 1st discharge capacity [mA·h/g] | Rate performance [%] |
|---|---|---|---|
| CAM.1 | 5.9 | 195.8 | 87.0 |
| CAM.2 | 21.1 | 197.5 | 87.2 |
| B-CAM.1 | 1.7 | 193.2 | 85.9 |

Table.2 Cell cycle performance

| Sample | Cycle retention | DCIR increase |
|---|---|---|
| CAM.1 | 92.0 | 179.3 |
| CAM.2 | 92.0 | 171.5 |
| B-CAM.1 | 92.1 | 187.6 |

## Claims

**1.** Process for making an electrode wherein the process comprises the following steps

(a) providing a lithiated transition metal oxide according to the formula $Li_{1+x}TM_{1-x}O_2$ wherein x is in the range of from zero to 0.1 and TM contains nickel and at least one of Co, Mn and Al,
(b) mixing the lithiated transition metal oxide from step (a) with carbon in electrically conductive form,
(c) exposing the mixture obtained in step (b) to a pressure in the range of from 100 to 500 MPa over a period of time of from one second to one minute, thereby causing cracks in at least some of the particles of the electrode active material,
(d) mixing the mixture from step (c) with a binder polymer and, optionally, with further carbon in electrically conductive form and with a solvent,
(e) applying the mixture from step (d) to a metal foil.

**2.** Process according to claim 1 wherein TM is a combination of elements according to general formula (I)

$$(Ni_aCo_bMn_c)_{1-d}M^1_d \qquad (I)$$

wherein

a is in the range of from 0.6 to 1.0,
b being in the range of from zero to 0.2,
c being in the range of from zero to 0.2, and
d being in the range of from zero to 0.1,
$M^1$ is selected from Al, Ti, Zr, W, Nb, Ta, Mo, Mg and combinations of at least two of the aforementioned,

$$a + b + c = 1,$$

and
at least one of b, c and d is greater than zero.

**3.** Process according to claim 1 or 2 wherein in step (b), carbon in electrically conductive form is graphite.

**4.** Process according to claim 3 wherein in step (b), the weight ratio of electrode active material provided in step (a) and graphite is in the range of from 100:1 to 20:1.

**5.** Process according to any of the preceding claims wherein step (c) is performed in an isostatic pressing device.

**6.** Particulate electrode active material according to the formula $Li_{1+x}TM_{1-x}O_2$ wherein x is in the range of from zero to 0.1 and TM contains nickel and at least one of Co, Mn and Al wherein at least 25 % of all particles have a crack level in the range of from 5 to 30 and wherein such cracks contain carbon in electrically conductive form, wherein the crack level is determined as defined in the description.

**7.** Particulate electrode active material according to claim 6 wherein TM is a combination of elements according to general formula (I)

$$(Ni_aCo_bMn_c)_{1-d}M^1_d \quad (I)$$

wherein

a is in the range of from 0.6 to 1.0,
b being in the range of from zero to 0.2,
c being in the range of from zero to 0.2, and
d being in the range of from zero to 0.1,
$M^1$ is selected from Al, Ti, Zr, W, Nb, Ta, Mo, Mg and combinations of at least two of the aforementioned,

$$a + b + c = 1,$$

and
at least one of b, c and d is greater than zero.

**8.** Particulate electrode active material according to claim 6 or 7 wherein the cracks are virtually free from binder polymer.

**9.** Particulate electrode active material according to any of the claims 6 to 8 wherein at least 60% of the particles of electrode active materials show cracks.

**10.** Particulate electrode active material according to any of the claims 6 to 9 wherein the variables in TM are selected as follows:

a is in the range of from 0.75 to 0.95,
b being in the range of from 0.025 to 0.125,
c being in the range of from 0.025 to 0.125, and
d being in the range of from zero to 0.1, and
$M^1$ being selected from Al, Ti and Zr.

**11.** Cathode comprising

(A) at least one particulate electrode active material according to any of the claims 6 to 10,
(B) at least one binder and, optionally,
(C) further carbon in electrically conductive form.

**12.** Electrochemical cell comprising

(1) a cathode according to claim 11,
(2) an anode, and
(3) an electrolyte.

**13.** Electrochemical cell according to claim 12 wherein said electrolyte (3) is selected from electrolytes that are solid at ambient temperature and that contain sulfur and phosphorus.

**14.** Electrochemical cell according to claim 13 wherein said electrolyte (3) is selected from the group consisting of $Li_2S-P_2S_5$, $Li_2S-P_2S_5-LiI$, $Li_2S-P_2S_5-Li_2O$, $Li_2S-P_2S_5-Li_2O-LiI$, $Li_2S-SiS_2-P_2S_5-LiI$, $Li_2S-P_2S_5-Z_mS_n$ wherein m and n are positive numbers and Z is a member selected from the group consisting of germanium, gallium and zinc, $Li_2S-SiS_2-Li_3PO_4$, $Li_2S-SiS_2-Li_yPO_z$, wherein y and z are positive numbers, $Li_7P_3S_{11}$, $Li_3PS_4$, $Li_{11}S_2PS_{12}$, $Li_7P_2S_8I$, and $Li_{7-r-2s}PS_{6-r-s}X^1_r$ wherein $X^1$ is chlorine, bromine or iodine, and the variables are defined as follows:

$$0.8 \leq r \leq 1.7$$

$$0 \leq s \leq (-0.25\ r) + 0.5.$$

**Patentansprüche**

1. Verfahren zur Herstellung einer Elektrode, wobei das Verfahren die folgenden Schritte umfasst:

   (a) Bereitstellen eines lithiierten Übergangsmetalloxids gemäß der Formel $Li_{1+x}TM_{1-x}O_2$, wobei x im Bereich von null bis 0,1 liegt und TM Nickel und mindestens eines von Co, Mn und Al enthält,
   (b) Mischen des lithiierten Übergangsmetalloxids aus Schritt (a) mit Kohlenstoff in elektrisch leitfähiger Form,
   (c) Einwirkenlassen eines Drucks im Bereich von 100 bis 500 MPa auf die in Schritt (b) erhaltene Mischung über einen Zeitraum von einer Sekunde bis einer Minute, wodurch in mindestens einigen der Teilchen des Elektrodenaktivmaterials Risse verursacht werden,
   (d) Mischen der Mischung aus Schritt (c) mit einem Bindemittelpolymer und gegebenenfalls mit weiterem Kohlenstoff in elektrisch leitfähiger Form und mit einem Lösungsmittel,
   (e) Aufbringen der Mischung aus Schritt (d) auf eine Metallfolie.

2. Verfahren nach Anspruch 1, wobei es sich bei TM um eine Kombination von Elementen gemäß der allgemeinen Formel (I)

   $$(Ni_aCo_bMn_c)_{1-d}M^1_d \qquad (I)$$

   handelt, wobei

   a im Bereich von 0,6 bis 1,0 liegt,
   b im Bereich von null bis 0,2 liegt,
   c im Bereich von null bis 0,2 liegt und
   d im Bereich von null bis 0,1 liegt,
   $M^1$ aus Al, Ti, Zr, W, Nb, Ta, Mo, Mg und Kombinationen von mindestens zwei davon ausgewählt ist,

   $$a + b + c = 1$$

   und
   mindestens eines von b, c und d größer als null ist.

3. Verfahren nach Anspruch 1 oder 2, wobei es sich in Schritt (b) bei dem Kohlenstoff in elektrisch leitfähiger Form um Graphit handelt.

4. Verfahren nach Anspruch 3, wobei in Schritt (b) das Gewichtsverhältnis von in Schritt (a) bereitgestelltem Elektrodenaktivmaterial und Graphit im Bereich von 100:1 bis 20:1 liegt.

5. Verfahren nach einem der vorstehenden Ansprüche, wobei Schritt (c) in einer Vorrichtung zum isostatischen Pressen durchgeführt wird.

6. Teilchenförmiges Elektrodenaktivmaterial gemäß der Formel $Li_{1+x}TM_{1-x}O_2$, wobei x im Bereich von null bis 0,1 liegt und TM Nickel und mindestens eines von Co, Mn und Al enthält, wobei mindestens 25 % aller Teilchen ein Rissniveau im Bereich von 5 bis 30 aufweisen und wobei derartige Risse Kohlenstoff in elektrisch leitfähiger Form enthalten, wobei das Rissniveau wie in der Beschreibung definiert bestimmt wird.

7. Teilchenförmiges Elektrodenaktivmaterial nach Anspruch 6, wobei es sich bei TM um eine Kombination von Elementen gemäß der allgemeinen Formel (I)

   $$(Ni_aCo_bMn_c)_{1-d}M^1_d \qquad (I)$$

handelt, wobei

a im Bereich von 0,6 bis 1,0 liegt,
b im Bereich von null bis 0,2 liegt,
c im Bereich von null bis 0,2 liegt und
d im Bereich von null bis 0,1 liegt,
$M^1$ aus Al, Ti, Zr, W, Nb, Ta, Mo, Mg und Kombinationen von mindestens zwei davon ausgewählt ist,

$$a + b + c = 1$$

und
mindestens eines von b, c und d größer als null ist.

**8.** Teilchenförmiges Elektrodenaktivmaterial nach Anspruch 6 oder 7, wobei die Risse praktisch frei von Bindemittelpolymer sind.

**9.** Teilchenförmiges Elektrodenaktivmaterial nach einem der Ansprüche 6 bis 8, wobei mindestens 60 % der Teilchen von Elektrodenaktivmaterialien Risse zeigen.

**10.** Teilchenförmiges Elektrodenaktivmaterial nach einem der Ansprüche 6 bis 9, wobei die Variablen in TM wie folgt gewählt sind:

a im Bereich von 0,75 bis 0,95 liegt,
b liegt im Bereich von 0,025 bis 0,125,
c liegt im Bereich von 0,025 bis 0,125, und
d liegt im Bereich von null bis 0,1, und
wobei $M^1$ aus Al, Ti und Zr ausgewählt ist.

**11.** Kathode, umfassend

(A) mindestens ein teilchenförmiges Elektrodenaktivmaterial nach einem der Ansprüche 6 bis 10,
(B) mindestens ein Bindemittel und gegebenenfalls
(C) ferner Kohlenstoff in elektrisch leitfähiger Form.

**12.** Elektrochemische Zelle, umfassend

(1) eine Kathode nach Anspruch 11,
(2) eine Anode und
(3) einen Elektrolyt.

**13.** Elektrochemische Zelle nach Anspruch 12, wobei der Elektrolyt (3) aus Elektrolyten ausgewählt ist, die bei Umgebungstemperatur fest sind und die Schwefel und Phosphor enthalten.

**14.** Elektrochemische Zelle nach Anspruch 13, wobei der Elektrolyt (3) ausgewählt ist aus der Gruppe bestehend aus $Li_2S$-$P_2S_5$, $Li_2S$-$P_2S_5$-LiI, $Li_2S$-$P_2S_5$-$Li_2O$, $Li_2S$-$P_2S_5$-$Li_2O$-LiI, $Li_2S$-$SiS_2$-$P_2S_5$-LiI, $Li_2S$-$P_2S_5$-$Z_mS_n$, wobei m und n für ganze positive Zahlen stehen und Z für ein Mitglied aus der Gruppe bestehend aus Germanium, Gallium und Zink steht, $Li_2S$-$SiS_2$-$Li_3PO_4$, $Li_2S$-$SiS_2$-$Li_yPO_z$, wobei y und z für ganze positive Zahlen stehen, $Li_7P_3S_{11}$, $Li_3PS_4$, $Li_{11}S_2PS_{12}$, $Li_7P_2S_8I$ und $Li_{7-r-2s}PS_{6-r-s}X^1{}_r$, wobei $X^1$ für Chlor, Brom oder Iod steht und die Variablen wie folgt definiert sind:

$$0,8 \leq r \leq 1,7$$

$$0 \leq s \leq (-0,25\ r) + 0,5.$$

## Revendications

1. Procédé de fabrication d'une électrode dans lequel le procédé comprend les étapes suivantes

   (a) la fourniture un oxyde de métal de transition lithié selon la formule $Li_{1+x}TM_{1-x}O_2$ dans laquelle x est dans la plage de zéro à 0,1 et TM contient du nickel et au moins un parmi Co, Mn et Al,
   (b) le mélange de l'oxyde de métal de transition lithié obtenu à l'étape (a) avec du carbone sous forme électroconductrice,
   (c) l'exposition du mélange obtenu à l'étape (b) à une pression dans la plage de 100 à 500 MPa pendant une période de temps d'une seconde à une minute, ce qui provoque des fissures dans au moins certaines des particules du matériau actif de l'électrode,
   (d) le mélange du mélange obtenu à l'étape (c) avec un polymère liant et, éventuellement, avec du carbone supplémentaire sous forme électroconductrice et avec un solvant,
   (e) l'application du mélange obtenu à l'étape (d) à une feuille métallique.

2. Procédé selon la revendication 1 dans lequel TM est une combinaison d'éléments selon la formule générale (I)

   $$(Ni_aCo_bMn_c)_{1-d}M^1_d \qquad (I)$$

   dans laquelle

   a est dans la plage de 0,6 à 1,0,
   b étant dans la plage de zéro à 0,2,
   c étant dans la plage de zéro à 0,2, et
   d étant dans la plage de zéro à 0,1,
   $M^1$ est choisi entre Al, Ti, Zr, W, Nb, Ta, Mo, Mg et des combinaisons d'au moins deux des éléments précédents,

   $$a + b + c = 1,$$

   et
   au moins parmi b, c et d est supérieur à zéro.

3. Procédé selon la revendication 1 ou 2 dans lequel, à l'étape (b), le carbone sous forme électroconductrice est le graphite.

4. Procédé selon la revendication 3 dans lequel, à l'étape (b), le rapport pondéral entre le matériau actif de l'électrode fourni à l'étape (a) et le graphite est dans la plage de 100:1 à 20:1.

5. Procédé selon l'une quelconque des revendications précédentes dans lequel l'étape (c) est réalisée avec un dispositif de pressage isostatique.

6. Matériau actif particulaire d'électrode selon la formule $Li_{1+x}TM_{1-x}O_2$ dans laquelle x est dans la plage de zéro à 0,1 et TM contient du nickel et au moins un parmi Co, Mn et Al dans lequel au moins 25 % de toutes les particules ont un niveau de fissure dans la plage de 5 à 30 et dans lequel de telles fissures contiennent du carbone sous forme électroconductrice, dans lequel le niveau de fissure est déterminé tel que défini dans la description.

7. Matériau actif particulaire d'électrode selon la revendication 6 dans lequel TM est une combinaison de métaux selon la formule générale (I)

   $$(Ni_aCo_bMn_c)_{1-d}M^1_d \qquad (I)$$

   dans laquelle

   a est dans la plage de 0,6 à 1,0,
   b étant dans la plage de zéro à 0,2,
   c étant dans la plage de zéro à 0,2, et
   d étant dans la plage de zéro à 0,1,

$M^1$ est choisi entre Al, Ti, Zr, W, Nb, Ta, Mo, Mg et des combinaisons d'au moins deux des éléments précédents,

$$a + b + c = 1,$$

et
au moins parmi b, c et d est supérieur à zéro.

8. Matériau actif particulaire d'électrode selon la revendication 6 ou 7 dans lequel les fissures sont pratiquement exemptes de polymère liant.

9. Matériau actif particulaire d'électrode selon l'une quelconque des revendications 6 à 8 dans lequel au moins 60 % des particules de matériau actif d'électrode présentent des fissures.

10. Matériau actif particulaire d'électrode selon l'une quelconque des revendications 6 à 9 dans lequel les variables dans TM sont choisies de la façon suivante :

    a est dans la plage de 0,75 à 0,95,
    b étant dans la plage de 0,025 à 0,125,
    c étant dans la plage de 0,025 à 0,125, et
    d étant dans la plage de zéro à 0,1, et
    $M^1$ étant choisi entre Al, Ti et Zr.

11. Cathode comprenant

    (A) au moins un matériau actif particulaire d'électrode selon l'une quelconque des revendications 6 à 10,
    (B) au moins un liant et, éventuellement,
    (C) du carbone supplémentaire sous forme électroconductrice.

12. Cellule électrochimique comprenant

    (1) une cathode selon la revendication 11,
    (2) une anode, et
    (3) un électrolyte.

13. Cellule électrochimique selon la revendication 12 dans laquelle ledit électrolyte (3) est choisi entre des électrolytes qui sont solides à température ambiante et qui contiennent du soufre et du phosphore.

14. Cellule électrochimique selon la revendication 13 dans laquelle ledit électrolyte (3) est choisi dans le groupe constitué par $Li_2S$-$P_2S_5$, $Li_2S$-$P_2S_5$-LiI, $Li_2S$-$P_2S_5$-$Li_2O$, $Li_2S$-$P_2S_5$-$Li_2O$-LiI, $Li_2S$-$SiS_2$-$P_2S_5$-LiI, $Li_2S$-$P_2S_5$-$Z_mS_n$ dans laquelle m et n sont des nombres positifs et Z est un élément choisi dans le groupe constitué par germanium, gallium et zinc, $Li_2S$-$SiS_2$-$Li_3PO_4$, $Li_2S$-$SiS_2$-$Li_yPO_z$, dans laquelle y et z sont des nombres positifs, $Li_7P_3S_{11}$, $Li_3PS_4$, $Li_{11}S_2PS_{12}$, $Li_7P_2S_8I$, et $Li_{7-r-2s}PS_{6-r-s}X^1_r$ dans laquelle $X^1$ est le chlore, le brome ou l'iode, et les variables sont définies de la façon suivante :

$$0,8 \leq r \leq 1,7$$

$$0 \leq s \leq (-0,25\ r) + 0,5.$$

Figures 1 a to 1 c: SEM images of CAM.1

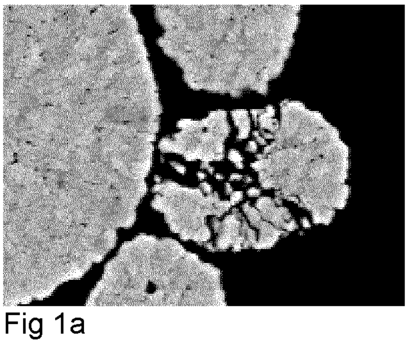

Fig 1a

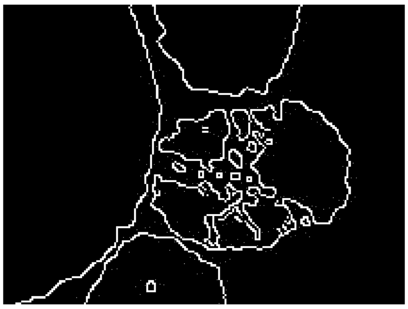

Fig 1b

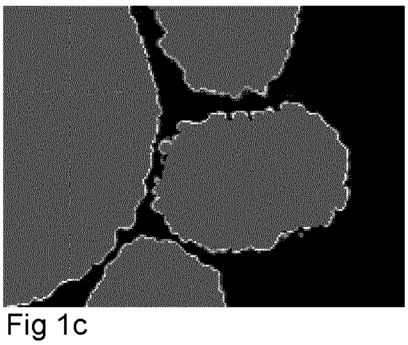

Fig 1c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20170104217 A
- EP 3553856 A
- US 20180166687 A
- US 2014072697 A1